# EUROPEAN PATENT SPECIFICATION

(11) **EP 0 696 311 B1**
(45) Date of publication and mention of the grant of the patent: **05.12.2001**
(21) Application number: 94913767.3
(22) Date of filing: 04.05.1994
(51) Int. Cl.: C10M 175/00, C07F 9/02

(54) **FLUID TREATMENT PROCESS**
VERFAHREN ZUR BEHANDLUNG VON FLÜSSIGKEITEN
PROCEDE DE TRAITEMENT DE FLUIDE

(30) Priority: 05.05.1993 GB 9309239
(43) Date of publication of application: 14.02.1996
(73) Proprietor: Great Lakes Chemical (Europe) GmbH, 8500 Frauenfeld (CH)
(72) Inventor: PHILLIPS, William, David, Stockport Cheshire SK12 1TB (GB)
(74) Representative: McPherson, Alexander
(86) International application number: GB9400954
(87) International publication number: WO9425550

(56) References cited:
- EP-A- 0 077 102
- GB-A- 2 248 236
- JP-A- 52 033 654
- US-A- 3 708 508
- US-A- 3 793 408
- US-A- 4 203 933
- US-A- 4 741 857
- DATABASE WPI Week 7729, Derwent Publications Ltd., London, GB; AN 77-51137Y & JP,A,52 068 152 (NISSHIN ELECTRICAL) 6 June 1977
- DATABASE WPI Section Ch, Week 7813, Derwent Publications Ltd., London, GB; Class E11, AN 78-24069A & JP,A,53 015 594 (NISSHIN ELECTRICAL KK) 13 February 1978
- PATENT ABSTRACTS OF JAPAN vol. 016, no. 383 (C-0974) 17 August 1992 & JP,A,04 122 792 (HITACHI LTD) 23 April 1992

## Description

This invention relates to novel conditioning processes useful in prolonging the effective life of functional fluids such as hydraulic fluids.

A variety of materials are utilised as non-aqueous hydraulic fluids and lubricants. The materials which are most commonly employed are triaryl phosphate esters, mineral oils and carboxylate esters. In use all of these materials degrade which degradation may manifest itself in the form of increased acidity of the fluid. As a result of this degradation the fluid must be replaced periodically. As this replacement is an expensive and time consuming operation a variety of reconditioning processes have been utilised in order to prolong the effective life of the fluid.

The various reconditioning processes which had been proposed for use with fluids comprising triaryl phosphates were reviewed by W D Phillips in Lubrication and Engineering Vol 39 (12), p766 to 780. A wide variety of solid materials including Fullers Earth, Attapulgus Clay, Activated Alumina, Diatomaceous Earth and Bentonite Clay have been used to filter the fluid. However, none of these processes proved to be ideal. There have also been proposals to utilise a macroporous anionic ion exchange resin as a filter preferably in combination with a cationic ion exchange resin. One disadvantage of using ion exchange resins to filter the fluid is that they are normally wet and their use introduces water into the fluid. This introduction of water is disadvantageous especially for fluids comprising esters such as triaryl phosphates, trialkyl phosphates, alkyl aryl phosphates and carboxylate esters as acids are produced by hydrolysis of the ester. There have been proposals to alleviate the increase in acidity resulting from hydrolysis of the fluid by incorporating a means for removing water from the fluid. The use of a vapour extractor acting on the main tank holding the fluid and a molecular sieve filter have been recommended although neither has proved ideal in use on a commercial scale.

The use of molecular sieves is less effective for ester based fluids as the acids produced by hydrolysis tend to remove metal ions from the sieve which in turn can increase the amount of particulate material deposited in the fluid and adversely effect the fluids surface active properties.

JP-A-52033654 discloses a process wherein a phosphate ester based oil is treated with alkali, washed with water, treated with a combination of a cationic ion exchange resin and an anionic ion exchange resin and then an evaporation step under reduced pressure.

We have now discovered a novel reconditioning process for non aqueous functional fluids which utilises an anionic ion exchange resin in combination with a vacuum dehydration system. Surprisingly, such procedures are effective in prolonging the life of a fluid or in reconditioning a degraded fluid.

Accordingly, this invention provides a process for the treatment of a non-aqueous functional fluid selected from phosphate esters, mineral oils and carboxylate esters which is characterised in that it comprises the steps of (i) contacting a portion of the total fluid mass with an anionic ion-exchange resin in the presence of sufficient water that the acidity of the fluid may be reduced (ii) subsequently removing water from the fluid by vacuum dehydration and (iii) combining the treated fluid with the main body of the fluid; the process being carried out in the apparatus in which the fluid is used.

The processes of this invention may be utilised not only to maintain the condition of a fluid but also to recondition a degraded fluid. In the process a portion of the fluid used in a particular apparatus will be passed through a bypass loop and the process will be applied to the fluid passing through the loop. The treated fluid will be combined with the main body of the fluid. The process may be operated continuously or intermittently in response to an analysis of the condition of the main body of the fluid.

The contact between the fluid and the anionic ion-exchange resin may conveniently be carried out by passing the fluid through a bed of the resin. Conveniently the resin can be packed into a cartridge which is inserted into a circuit through which the fluid can be pumped. In a preferred embodiment this circuit will be a bypass loop through which the minor portion of the fluid is passed.

Commercially available forms of the anionic ion exchange resins normally contain relatively large amounts of water. Some of this water is picked up by the fluid and removed in the dehydration step. These commercial resins may be and preferably are utilised in the processes of this invention. The water content of the resin may be reduced prior to use but this is not normally necessary. We have discovered that the resin bed remains functional in the processes of this invention for long periods without the need for its regeneration. During the operation of the process the resin may become ineffective with the result that the acidity of the fluid is not reduced to or maintained at the desired level. In this circumstance it may be necessary to employ a fresh resin bed.

The resin can be used either in the commercially available forms which are relatively wet or it can be predried so as to reduce its water content. The water content of a predried resin should not be reduced to a point at which it is rendered ineffective or degraded. In general we prefer to utilise resins which contain from 1 to 20 preferably from 3 to 15% w/w of water. The use of predried resins may be preferable since this minimises the initial increase in the water content of the fluid when it is contacted with the resin.

After contact with the resin the fluid will contain a quantity of water and this is reduced by a vacuum dehydration process. Such dehydration processes can readily be effected using commercially available equipment such as the HIVAC 124 Oil Purifier and the HSP 181 Series Oil Purifiers sold by Pall Industrial Hydraulics Limited. The dehydration should be carried out at a temperature which is sufficiently low to avoid degradation of the fluid. In the case of triaryl phosphate based fluids the dehydration will preferably be carried out at a temperature of less than 75°C. The dehydration step need not remove all the water although it is preferred that as much water as is reasonably practical is removed.

The dehydration step is preferably applied to the fluid shortly or immediately after it has been contacted with the ion-exchange resin. In this preferred embodiment the degradation of the fluid is minimised. The dehydration equipment is advantageously and conveniently situated on the by-pass loop immediately downstream of the resin bed. The dehydration step is more effective when applied to the relatively small volume of fluid using this arrangement.

The use of an anionic exchange resin treatment in combination with a vacuum dehydration step has been discovered to reduce the acidity of the fluid and may also serve to increase its volume resistivity. The treatment process also tends to increase the clarity of the fluid and to reduce the concentration of metal ions in the fluid. The treatment may also serve to improve the water separability of the fluid.

The useful life of the fluid is prolonged as a result. In a preferred embodiment the fluid is subjected to a vacuum with a pull of from 650 to 950 mbar (110 to -200 mbar absolute pressure) and more preferably to a pull within the range 750 to 880 mbar (10 to -120 mbar absolute pressure).

The processes of this invention may usefully be employed to treat any of the major classes of functional fluid in particular fluids based upon triaryl phosphates, trialkyl phosphates, alkyl aryl phosphates, mineral oils and carboxylate esters. The processes of this invention find particular application in the treatment of triaryl phosphate based fluids.

The triaryl phosphate may be derived from natural or synthetic phenols. Examples of phosphates derived from natural phenols include mesityl phosphate, tricresyl phosphate, trixylenyl phosphate and cresyl diphenyl phosphate. The synthetic phenols are most preferably those prepared by the reaction of phenol with an alkylating agent having three or four carbon atoms. The product of such a reaction may comprise a mixture of phenols and alkylated phenols. Triaryl phosphates produced by the phosphorylation of such a mixture may also be used in this invention.

The carboxylate esters which may usefully be treated according to this invention include the trimellitates, diesters eg., adipates, sebacates and esters or trimethylolpropane and pentaerythritol.

The processes of this invention are preferably used to maintain or return the properties of the fluid to the levels preferred by the user. In particular the water content of the body of the fluid will preferably be maintained or reduced to less than 0.1% w/w and more preferably less than 0.05% w/w. The neutralisation number of the fluid will preferably be less than 0.2 mgKOH/gm and more preferably less than 0.1 mgKOH/gm.

The applicants have also discovered that the processes of this invention offer an additional advantage in that the concentration of metal ions in the fluid, most notably, sodium, calcium, magnesium and aluminium can be controlled, or in the preferred embodiments reduced. The processes of this invention are preferably the sole process used to treat the fluid. They can, however, be used in combination with other known processes or with particular elements of those known processes. In particular, the fluid may also be contacted with a cationic ion exchange resin or with a filter comprising both an anionic and a cationic ion exchange resin. However, in general the use of a cationic resin will detract from the advantages of the processes of this invention and is thereby less preferred.

Functional fluids based on those various classes of compound will normally be formulated with minor proportions of other ingredients such as antifoaming agents and oxidation inhibitors.

The suitability of any particular anionic ion exchange resin for use in the processes of this invention may be determined by routine experiment. Those which are ineffective in reducing the level of acidity in the fluid are not useful. Likewise any resins which are not stable in the presence of the fluid are preferably not used. Examples of ion exchange resins which are useful in the processes of this invention include those sold under the Trade Marks AMBERLYST A-21, AMBERLYST IRA-68 and DOWEX 400LB UG. The physical form of resin may affect its performance in the processes of this invention. In particular we have discovered that uniformly sized resin particles (such as are sold as monospheres) may provide improved performance and their use forms a preferred aspect of this invention.

The invention is illustrated by the following examples: Example 6 reflecting the invention

### Example 1

### SUMMARY OF METHODS USED:

### Method A (small scale test 50 mls)

The Test Fluid is passed through a vertical glass column, gravity fed, containing the specified solid treatment. The column and Test Fluid are heated to 60°C by use of an infrared lamp. After several passes the "treated" fluid is analysed to determine any change in acidity.

NOTE: (Column contains a filter to remove particulates). (Treatment level = 5% v/v solid to fluid).

### Method B (up to 120 litres)

The Test Fluid, heated to 60°C is pumped from a stainless steel reservoir, through two stainless steel housings which contain the cartridges holding the specified solid treatment, and back into the reservoir, thus creating a continuous circulatory system.

After completion of the test a sample of fluid is taken and analysed to determine any change in acidity and metal content.

NOTE: (Cartridge contains a filter to remove particulates). (Treatment level up to 4% w/w solid to fluid).

| METHOD (A) | FLUID TYPE | | |
|---|---|---|---|
| **SOLID TREATMENT** | **PHOSPHATE ESTER** | **POLYOL ESTER** | **MINERAL OIL** |
| Ion Exchange Resin Amberlyst A-21 (Anionic) | | | |
| Acidity MgKOH/g Before Treatment | 0.58 | 8.66 | 0.62 |
| Acidity mgKOH/g After Treatment | 0.00 | 5.67 | 0.00 |
| Ion Exchange Resin Dowex 400LB UG (Anionic) | | | |
| Acidity MgKOH/g Before Treatment | 0.58 | 8.66 | 0.62 |
| Acidity MgKOH/g After Treatment | 0.01 | 5.27 | 0.11 |
| Ion Exchange Resin Amberlyst IRA-68 (Anionic) | | | |
| Acidity mgKOH/g Before Treatment | 0.58 | 8.66 | 0.62 |
| Acidity mgKOH/g After Treatment | 0.05 | 2.66 | 0.16 |

### EFFECT OF SOLID TREATMENT ON ACIDITY AND METAL CONTENT IN PHOSPHATE ESTERS

| METHOD (B) | | | | | |
|---|---|---|---|---|---|
| **SOLID TREATMENT** | **ACIDITY** | **METAL CONTENT PPM** | | | |
| | **mg/KOH/g** | Na | AL | Mg | Ca |
| Ion Exchange Resin Amberlyst A-21 (Anionic) | | | | | |
| Before Treatment | 0.40 | 4 | 13 | 38 | 22 |
| After Treatment | 0.01 | 1 | 3 | 7 | 4 |
| Ion Exchange Resin Amberlyst A-21 (Anionic) | | | | | |
| Before Treatment | 0.29 | 3 | 10 | 30 | 22 |
| After Treatment | 0.08 | 3 | 5 | 5 | 5 |

### Example 2

Samples of a triaryl phosphate functional fluid sold under the Trade Mark Reolube Turbofluid (TF)46 by the FMC Corporation (UK) Ltd were tested using Method A described above. Four tests, A, B, C and D were carried out using four samples of an anionic exchange resin sold under the Trade Mark Amberlyst A-21 having different water contents (the differences having been introduced by drying the resin). The samples were passed through the resin three times. The neutralisation number of the fluid was determined after each pass. The metal ion concentration in the fluid was determined after three passes. The results are presented in the following Table 3.

**Table 3**

| | | | | | | | | | | | | | | | | |
|---|---|---|---|---|---|---|---|---|---|---|---|---|---|---|---|---|
| WATER CONTENT RESIN % W/W | 4.8 | | | | 10.2 | | | | 14.8 | | | | 43.0 | | | |
| TF46 STARTING VALUE NEUT No NNo MgKOH/g | 0.51 | | | | 0.51 | | | | 0.51 | | | | 0.51 | | | |
| RESULTS OF COLUMN TREATMENT | | | | | | | | | | | | | | | | |
| 1ST PASS NNo MgKOH/g | 0.17 | | | | 0.11 | | | | 0.08 | | | | 0.22 | | | |
| 2ND PASS NNo MgKOH/g | 0.15 | | | | 0.11 | | | | 0.11 | | | | 0.12 | | | |
| 3RD PASS NNo MgKOH/g | 0.14 | | | | 0.10 | | | | 0.10 | | | | 0.09 | | | |
| METALS ppm | Na | Ca | Al | Mg | Na | Ca | Al | Mg | Na | Ca | Al | Mg | Na | Ca | Al | Mg |
| TF46 STARTING VALUE | 3 | 22 | 14 | 31 | 3 | 22 | 14 | 31 | 3 | 22 | 14 | 31 | 3 | 22 | 14 | 31 |
| AFTER 3 PASSES | 2 | 16 | 10 | 25 | 2 | 12 | 9 | 18 | 2 | 9 | 8 | 15 | 2 | 12 | 8 | 17 |

### Example 3

The procedure of Example 2 was repeated using an ion exchange resin sold under the Trade Mark Dow M-43. The fluid utilised was Reolube TF46.

The results are presented in the following Table 4.

**Table 4**

| | | | | |
|---|---|---|---|---|
| WATER CONTENT RESIN % W/W | 5.0 | 10.1 | 15.5 | 44.5 |
| TF46 STARTING VALUE NEUT No MgKOH/g | 0.51 | 0.51 | 0.51 | 0.51 |
| RESULTS OF COLUMN TREATMENT | | | | |
| 1ST PASS NEUT No MgKOH/g | 0.14 | 0.14 | 0.10 | 0.13 |
| 2ND PASS NEUT No MgKOH/g | 0.12 | 0.12 | 0.10 | 0.10 |
| 3RD PASS NEUT No MgKOH/g | 0.08 | 0.07 | 0.07 | 0.05 |

### Example 4

Method A was utilised to treat a mineral oil based functional fluid (VG46) and a polyol ester based fluid. The water content of the resins was measured and the results of these tests are summarised in Table 5.

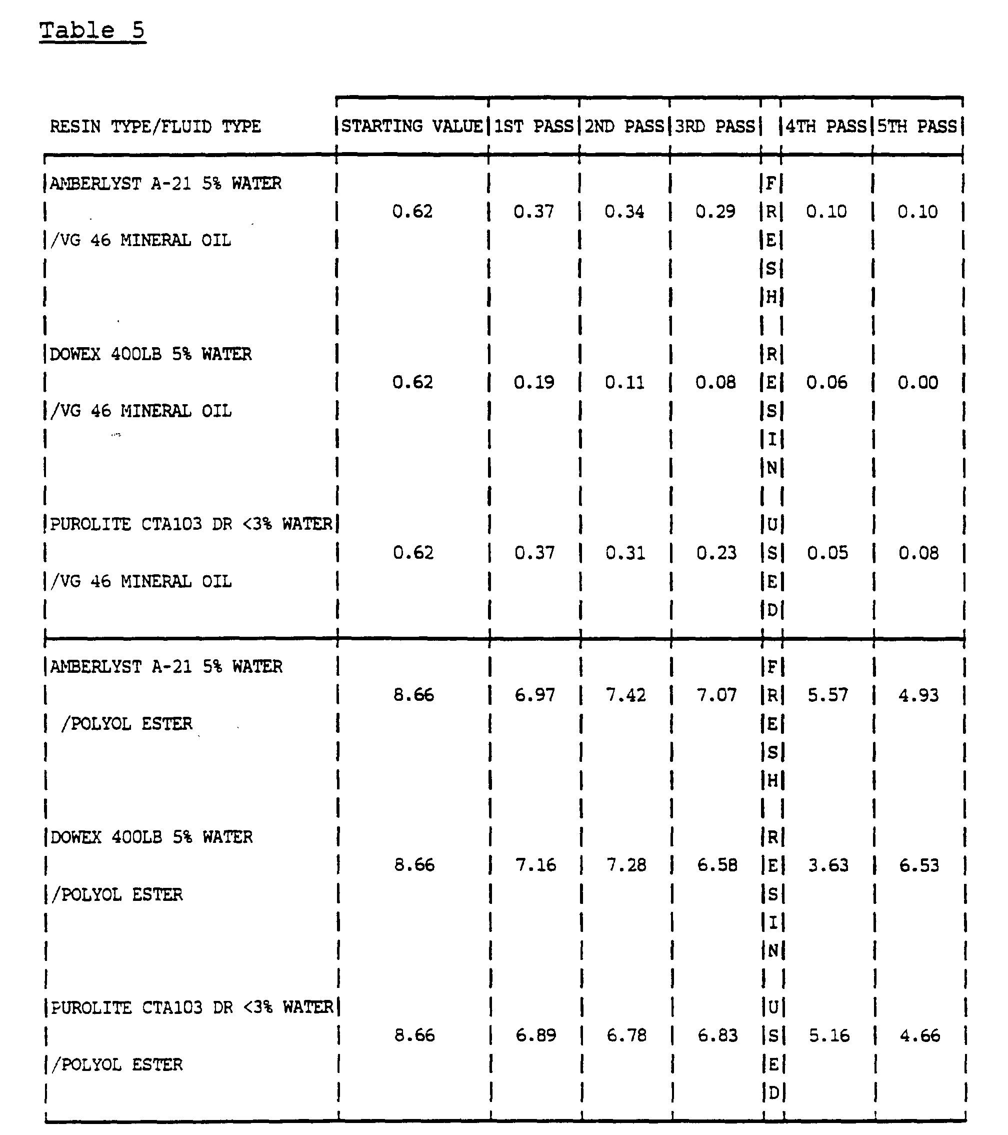

### Example 5

Method A was used to treat a phosphate ester based fluid using three different anionic ion-exchange resins. The results are shown in the following Table 6.

**Table 6**

| **PROPERTY** | **FLUID AS RECEIVED** | **AMBERLYST A 21 TREATED** | | **DOWEX MONO AMW 400LB UG TREATMENT** | |
|---|---|---|---|---|---|
| | (93 F 1) | AFTER 18 PASSES | AFTER 108 PASSES | AFTER 58 PASSES | AFTER 90 PASSES |
| NEUTRALISATION NUMBER mg/KOH/g | 0.16 | 0.08 | 0.04 | 0.03 | 0.00 |
| METALS | | | | | |
| Na ppm | 5 | 1 | <1 | <1 | <1 |
| Al | <1 | <1 | 1 | 2 | <1 |
| Ca | 5 | 4 | 2 | 4 | 3 |
| Mg | 1 | 1 | 1 | <1 | <1 |
| Fe | 2 | 2 | 1 | <1 | <1 |
| Cu | 1 | 1 | 1 | <1 | <1 |

### Example 6

Method B was adapted by connecting a Pall HSP 181 Series Oil Purifier Vacuum Dehydration Pump to the stainless steel reservoir. The resin used in these tests was DOWEX MONO AMW 400 LB UG (wet 50% water). The test fluid was a triarylphosphate functional fluid sold under the Trademark Reolube Turbofluid (TF)46 by the FMC Corporation (UK) Limited.

The fluid was first treated by pumping it through the cartridges holding the ion-exchange resin. This treatment was continued until such time as the acidity of the resin was constant or nearly constant. Thereafter the fluid was pumped through the vacuum pump where it was subjected to a pull of 850 mbars. This vacuum treatment was continued until the water content of the fluid was less than 0.02% by weight.

Analysis was carried out on:
1. Untreated fluid.
2. Vacuum dried, untreated fluid.
3. Resin treated to 1% v/v, 17 cycles (no vacuum drying).
4. Resin treated to 1% v/v and vacuum dried.
5. Continuation of 1% v/v resin treatment (No 4) after vacuum drying (24 further cycles).
6. Additional 1% v/v resin treatment (2% v/v total), (on No 5) (1.5 cycles).

The results are summarised in Table 7 and Table 8.

**Table 7**

| FLUID/TREATMENT | NEUT NO | | VR | METALS (PPM) | | | |
|---|---|---|---|---|---|---|---|
| | mgKOH/g | WATER% | OHM CM | Na | Mg | Ca | Al |
| | | | x10¹⁰ | | | | |
| UNTREATED | 0.44 | 0.10 | 0.014 | 3 | 12 | 7 | 2 |
| | | | x10¹⁰ | | | | |
| PALL HSP 181 VACUUM PURIFIER 4 HRS ONLY | 0.41 | 0.02 | 0.016 | 2 | 10 | 7 | 3 |
| | | | x10¹⁰ | | | | |
| RESIN (WET 1% V/V) ONLY (17 CYCLES) | 0.08 | 0.05 | 0.39 | 2 | 7 | 4 | <2 |
| | | | X10¹⁰ | | | | |
| RESIN (WET 1% V/V) (17 CYCLES) + PALL VACUUM 4 HRS | 0.08 | 0.02 | 0.32 | 2 | 8 | 4 | <2 |
| | | | x10¹⁰ | | | | |
| CONTINUED RESIN 1% V/V (TOTAL 41 CYCLES) | 0.07 | 0.02 | 0.63 | - | - | - | - |
| | | | x10¹⁰ | | | | |
| CONTINUED + FRESH 1% V/V RESIN WET 2% V/V (TOTAL) FIRST FLUID (3 HRS) | 0.02 | 0.34 | 0.61 | - | - | - | - |
| | | | x10¹⁰ | | | | |
| RESIN WET 2% V/V (TOTAL) (1.5 CYCLES) | 0.02 | 0.14 | 0.93 | <1 | 6 | 3 | <1 |
| RESIN 1.5 CYCLES | | | x10¹⁰ | | | | |
| + PALL VACUUM 3 HRS | 0.02 | <0.02 | 1.23 | - | - | - | - |

**Table 8**

| | UNTREATED | UNTREATED + VACUUM DRIED | RESIN TREATED 2% V/V FIRST FLUID | RESIN TREATED 2% V/V 1.5 CYCLES | RESIN TREATED 2% V/V 1.5 CYCLES VACUUM DRIED |
|---|---|---|---|---|---|
| WATER CONTENT | 0.10% | 0.02% | 0.34% | 0.14% | <0.02% |
| INITIAL ACIDITY mgKOH/g | 0.44 | 0.41 | 0.018 | 0.029 | 0.025 |
| ACIDITY AFTER: | | | | | |
| 65 HRS | 0.63 | 0.47 | 0.022 | -0.009 | -0.014 |
| 116 HRS | 0.85 | 0.55 | 0.041 | 0.020 | -0.013 |
| 164 HRS | 1.06 | 0.63 | 0.12 | 0.060 | 0.014 |
| COPPER WEIGHT LOSS AFTER 164 HOURS | | | | | |
| mg | -2.3 | -1.8 | -0.2 | -1.1 | -1.7 |
| mg cm² | -0.18 | -0.14 | -0.015 | -0.08 | -0.13 |

## Claims

1. A process for the treatment of a non-aqueous functional fluid selected from phosphate esters, mineral oils and carboxylate esters which is **characterised in that** it comprises the steps of (i) contacting a portion of the total fluid mass with an anionic ion-exchange resin in the presence of sufficient water that the acidity of the fluid may be reduced (ii) subsequently removing water from the fluid by vacuum dehydration and (iii) combining the treated fluid with the main body of the fluid; the process being carried out in the apparatus in which the fluid is used.

2. A process according to claim 1 **characterised in that** the water is removed from the fluid before any significant degradation of the fluid takes place.

3. A process according to either of claims 1 or 2 **characterised in that** water is removed from the fluid immediately after it has been in contact with the ion-exchange resin.

4. A process according to any of the preceding claims which is **characterised in that** the neutralisation number of the fluid after treatment is less than 0.2 mgKOH/gm.

5. A process according to claim 4 **characterised in that** the neutralisation number of the fluid after treatment is less than 0.1 mgKOH/gm.

6. A process according to any of the preceding claims **characterised in that** the water content of the fluid after treatment is less than 0.1% w/w.

7. A process according to claim 6 **characterised in that** the water content of the fluid after treatment is less than 0.05% w/w.

8. A process according to any of the preceding claims **characterised in that** the vacuum dehydration is carried out by applying a pull of from 650 to 950 mbar to the fluid.

9. A process according to any of the preceding claims **characterised in that** the treatment is carried out at a temperature of less than 75°C.

10. A process according to any of the preceding claims **characterised in that** the ion-exchange resin is not dried prior to being used.

11. A process according to any of the preceding claims **characterised in that** the anionic ion-exchange resin is selected from those resins sold under the Trademarks Amberlyst A-21, Amberlyst IRA-68 and DOWEX 400LB.

12. A process according to any of the preceding claims **characterised in that** the anionic ion-exchange resin comprises uniformly sized resin particles.

13. A process according to any of the preceding claims **characterised in that** the treatment is used to maintain the neutralisation number of the fluid at less than 0.2 mgKOH/gm and the water content of the fluid at less than 0.1% w/w.

14. A process according to any of the preceding claims **characterised in that** the treatment process is used to reduce the acid value of the fluid to less than 0.2 mgKOH/gm and/or the water content of the fluid to less than 0.1% w/w.

15. A process according to any of the preceding claims **characterised in that** the functional fluid is a triaryl phosphate, a trialkyl phosphate or an alkyl aryl phosphate based fluid.

16. A process according to claim 15 **characterised in that** the triaryl phosphate is selected from the group comprising mesityl phosphate, tricresyl phosphate, trixylenyl phosphate, cresyl diphenyl phosphate, or synthetic phosphates produced by the phosphorylation of mixtures of phenols and alkylated phenols produced by the reaction of phenol with an alkylating agent comprising three or four carbon atoms.

17. A process according to claim 15 **characterised in that** the triaryl phosphate is a synthetic triaryl phosphate.

18. A process according to any of claims 1 to 14 **characterised in that** the functional fluid is a carboxylate ester based functional fluid.

19. A process according to claim 18 **characterised in that** the ester is a trimellitate, an adipate, a sebacate or an ester of trimethylolpropane or pentaerythritol.

20. A process according to any of claims 1 to 14 **characterised in that** the fluid is a mineral oil based fluid.

21. A process according to any of the preceding claims **characterised in that** the process is used to maintain the condition of the fluid.

## Patentansprüche

1. Verfahren zur Behandlung eines nichtwässrigen, funktionalen Fluids, ausgewählt aus Phosphatestern, Mineralölen und Carboxylatestern, das **dadurch gekennzeichnet ist, dass** es die Schritte (i) Kontaktieren eines Teils der gesamten Fluidmenge mit einem anionischen Ionenaustauscherharz in Gegenwart von ausreichend Wasser, damit der Säuregehalt des Fluids verringert werden kann, (ii) anschließend Entfernen von Wasser aus dem Fluid durch Vakuumentwässerung und (iii) Vereinigen des behandelten Fluids mit dem Hauptteil des Fluids, wobei das Verfahren in dem Gerät durchgeführt wird, in dem das Fluid verwendet wird, umfaßt.

2. Verfahren gemäß Anspruch 1, **dadurch gekennzeichnet, dass** das Wasser aus dem Fluid entfernt wird, bevor eine signifikante Verschlechterung des Fluids eintritt.

3. Verfahren gemäß einem der Ansprüche 1 oder 2, **dadurch gekennzeichnet, dass** das Wasser sofort aus dem Fluid entfernt wird, nachdem es mit dem Ionenaustauscherharz kontaktiert wurde.

4. Verfahren gemäß einem der vorstehenden Ansprüche, **dadurch gekennzeichnet, dass** die Neutralisationszahl des Fluids nach der Behandlung weniger als 0,2 mgKOH/g beträgt.

5. Verfahren gemäß Anspruch 4, **dadurch gekennzeichnet, dass** die Neutralisationszahl des Fluids nach der Behandlung weniger als 0,1 mgKOH/g beträgt.

6. Verfahren gemäß einem der vorstehenden Ansprüche, **dadurch gekennzeichnet, dass** der Wassergehalt des Fluids nach der Behandlung weniger als 0,1 Gew.% beträgt.

7. Verfahren gemäß Anspruch 6, **dadurch gekennzeichnet, dass** der Wassergehalt des Fluids nach der Behandlung weniger als 0,05 Gew.% beträgt.

8. Verfahren gemäß einem der vorstehenden Ansprüche, **dadurch gekennzeichnet, dass** die Vakuumentwässerung durch Anwenden eines Unterdrucks auf das Fluid von 650 mbar bis 950 mbar durchgeführt wird.

9. Verfahren gemäß einem der vorstehenden Ansprüche, **dadurch gekennzeichnet, dass** die Behandlung bei einer Temperatur von weniger als 75°C durchgeführt wird.

10. Verfahren gemäß einem der vorstehenden Ansprüche, **dadurch gekennzeichnet, dass** das Ionenaustauscherharz vor der Verwendung nicht getrocknet wird.

11. Verfahren gemäß einem der vorstehenden Ansprüche, **dadurch gekennzeichnet, daß** das anionische Ionenaustauscherharz aus solchen Harzen ausgewählt wird, die unter den Handelsmarken Amberlyst A-21, Amberlyst IRA-68 und DOWEX 400LB verkauft werden.

12. Verfahren gemäß einem der vorstehenden Ansprüche, **dadurch gekennzeichnet, dass** das anionische Ionenaustauscherharz Harzteilchen von einheitlicher Größe umfasst.

13. Verfahren nach einem der vorstehenden Ansprüche, **dadurch gekennzeichnet, dass** die Behandlung zur Aufrechterhaltung der Neutralisationszahl des Fluids von weniger als 0,2 mgKOH/g und des Wassergehalts des Fluids von weniger als 0,1 Gew.% verwendet wird.

14. Verfahren gemäß einem der vorstehenden Ansprüche, **dadurch gekennzeichnet, dass** das Behandlungsverfahren zur Verringerung des Säurewerts des Fluids auf weniger als 0,2 mgKOH/g und/oder des Wassergehalts des Fluids auf weniger als 0,1 Gew.% verwendet wird.

15. Verfahren gemäß einem der vorstehenden Ansprüche, **dadurch gekennzeichnet, dass** das funktionale Fluid ein Fluid auf der Basis eines Triarylphosphats, eines Trialkylphophats oder eines Alkylarylphosphats ist.

16. Verfahren gemäß Anspruch 15, **dadurch gekennzeichnet, dass** das Triarylphosphat ausgewählt wird aus der Gruppe, umfassend Mesitylphosphat, Tricresylphosphat, Trixylenylphosphat, Cresyldiphenylphosphat oder synthetischen Phosphaten, hergestellt durch Phosphorylierung von Gemischen von Phenolen und alkylierten Phenolen, hergestellt durch Umsetzung von Phenol mit einem Alkylierungsmittel, umfassend drei oder vier Kohlenstoffatome.

17. Verfahren gemäß Anspruch 15, **dadurch gekennzeichnet, dass** das Triarylphosphat ein synthetisches Triarylphosphat ist.

18. Verfahren gemäß einem der Ansprüche 1 bis 14, **dadurch gekennzeichnet, dass** das funktionale Fluid ein funktionales Fluid auf der Basis eines Carboxylatesters ist.

19. Verfahren gemäß Anspruch 18, **dadurch gekennzeichnet, dass** der Ester ein Trimellitat, ein Adipat, ein Sebacat oder ein Ester aus Trimethylolpropan oder Pentaerythrit ist.

20. Verfahren gemäß einem der Ansprüche 1 bis 14, **dadurch gekennzeichnet, dass** das Fluid ein Fluid auf der Basis von Mineralöl ist.

21. Verfahren gemäß einem der vorstehenden Ansprüche, **dadurch gekennzeichnet, dass** das Verfahren zur Aufrechterhaltung des Zustands des Fluids verwendet wird.

## Revendications

1. Procédé pour le traitement d'un fluide fonctionnel non aqueux choisi parmi les esters phosphate, les huiles minérales et les esters carboxylate, **caractérisé en ce qu'**il comprend les étapes consistant à (i) mettre en contact une partie de la masse de fluide totale avec une résine anionique échangeuse d'ions en présence d'une quantité d'eau suffisante pour que l'acidité du fluide puisse être réduite, (ii) par la suite, éliminer l'eau du fluide par déshydratation sous vide et (iii) mélanger le fluide traité avec la masse principale du fluide, le procédé étant réalisé à l'intérieur de l'appareil dans lequel le fluide est utilisé.

2. Procédé selon la revendication 1, **caractérisé en ce que** l'eau est éliminée du fluide avant toute dégradation importante du fluide.

3. Procédé selon la revendication 1 ou 2, **caractérisé en ce que** l'eau est éliminée du fluide immédiatement après sa mise en contact avec la résine échangeuse d'ions.

4. Procédé selon l'une quelconque des revendications précédentes, **caractérisé en ce que** l'indice de neutralisation du fluide après traitement est inférieur à 0,2 mgKOH/gm.

5. Procédé selon la revendication 4, **caractérisé en ce que** l'indice de neutralisation du fluide après traitement est inférieure à 0,1 mgKOH/gm.

6. Procédé selon l'une quelconque de revendications précédentes, **caractérisé en ce que** la teneur en eau du fluide après traitement est inférieure à 0,1 %.

7. Procédé selon la revendication 6, **caractérisé en ce que** la teneur en eau du fluide après traitement est inférieure à 0,05 %.

8. Procédé selon l'une quelconque des revendications précédentes, **caractérisé en ce que** la déshydratation sous vide est réalisée en appliquant au fluide une aspiration de 650 à 950 mbars.

9. Procédé selon l'une quelconque des revendications précédentes, **caractérisé en ce que** le traitement est réalisé à une température inférieure à 75°C.

10. Procédé selon l'une quelconque des revendications précédentes, **caractérisé en ce que** la résine échangeuse d'ions n'est pas séchée avant d'être utilisée.

11. Procédé selon l'une quelconque des revendications précédentes, **caractérisé en ce que** la résine échangeuse d'ions est choisie parmi les résines vendues sous les marques de fabrique Amberlyst A-21, Amberlyst IRA-68 et DOWEX 400LB.

12. Procédé selon l'une quelconque des revendications précédentes, **caractérisé en ce que** la résine échangeuse d'ions comprend des particules de résine de taille uniforme.

13. Procédé selon l'une quelconque des revendications précédentes, **caractérisé en ce que** le traitement est utilisé pour maintenir l'indice de neutralisation du fluide à moins de 0,2 mgKOH/gm et la teneur en eau du fluide à moins de 0,1 %.

14. Procédé selon l'une quelconque des revendications précédentes, **caractérisé en ce que** le procédé de traitement est utilisé pour réduire l'indice d'acide du fluide à moins de 0,2 mgKOH/gm et/ou la teneur en eau du fluide à moins de 0,1 %.

15. Procédé selon l'une quelconque des revendications précédentes, **caractérisé en ce que** le fluide fonctionnel est un fluide à base de phosphate de triaryle, de phosphate de trialkyle, ou un fluide à base de phosphate d'aryl alkyle.

16. Procédé selon la revendication 15, **caractérisé en ce que** le phosphate de triaryle est choisi parmi le groupe comprenant le phosphate de mésityle, le phosphate de tricrésyle, le phosphate de trixylényle, le phosphate de diphényl crésyle, ou les phosphates synthétiques produits par phosphorylisation de mélanges de phénols produits par la réaction du phénol avec un agent d'alkylation comprenant trois ou quatre atomes de carbone.

17. Procédé selon la revendication 15, **caractérisé en ce que** le phosphate de triaryle est un phosphate de triaryle synthétique.

18. Procédé selon l'une quelconque des revendications 1 à 14, **caractérisé en ce que** le fluide fonctionnel est un fluide fonctionnel à base d'ester carboxylate.

19. Procédé selon la revendication 18, **caractérisé en ce que** l'ester est un trimellitate, un adipate, un sébacate ou un ester de trimethylolpropane ou de pentaerythritol.

20. Procédé selon l'une quelconque des revendications 1 à 14, **caractérisé en ce que** le fluide est un fluide à base d'huile minérale.

21. Procédé selon l'une quelconque des revendications précédentes, **caractérisé en ce que** le procédé est utilisé pour conserver la condition du fluide.
